# EUROPEAN PATENT APPLICATION

(11) **EP 2 808 122 A1**
(43) Date of publication of application: **03.12.2014**
(21) Application number: 14169985.0
(22) Date of filing: 27.05.2014
(51) Int. Cl.: B23Q 3/155, B23D 19/06

(54) **Device for automatic handling of annular components**

(30) Priority: 28.05.2013 SE 1350647
(71) Applicant: Andersson, Johnny, 619 32 Trosa (SE)
(72) Inventor: Andersson, Johnny, 619 32 Trosa (SE)
(74) Representative: Reyier, Ann-Mari

(57) **Abstract**

The present invention relates to a device for automatic handling of annular components (10) comprising cutting tools. The device comprises component storage including a plurality of protruding holders (4) for carrying annular components, a manipulator arranged to pick selected components from the component storage, and a control system configured to control the movements of the manipulator. The component storage is arranged in the form of a carousel storage comprising a rotatable body and the holders protrude from the body in different radial directions, and the control system is arranged to control the movements of the body so that the movements of the body is synchronized with the movements of the manipulator, and at least some of the holders comprise a damping element (14,15) with a resilient surface arranged to be in contact with the annular components (10) when these are suspended on the holders.

## Description

### Field of the invention

The present invention relates to an device for automatic handling of annular components comprising cutting tools, wherein the device comprises a component storage having a plurality of protruding holders for carrying annular components, a manipulator arranged to pick selected components from the component storage, and a control system arranged to control the movements of the manipulator in dependence on the sequence of components. Cutting tools refer to cutters and various types of spacers.

### Prior Art

A tool set comprising a number of cutting tools arranged at a distance from each other is used during manufacturing of metal strips, such as steel and aluminium strips, to cut a wider metal strip into a number of narrower metal strips. The width of the metal strips is decided by the customer. Different customers have different preferences regarding the width of the stripes. If the metal strip manufacturer has many different customers, the tool set must be changed frequently. Sometimes the tool set needs to be replaced as often as every twenty minutes, and it is not unusual that the set needs to be replaced on average every hour.

The tool set comprises a number of cutters arranged at a distance from each other. The distance between the cutters is determined by the desired width of the strips to be cut. A number of spacers are arranged between the cutters to keep the cutters at a distance from each other so that a desired strip width is obtained, and to determine an axial distance between the cutters in an upper and lower cutter shaft. It is very important that the distance between the cutters is correct. Otherwise, the customer gets incorrect width of the strip. A number of spacers with different standard thicknesses are available in order to obtain the desired distance between the cutters. Which spacers to be used in a certain application are determined based on the available standard thicknesses of the spacers.

The cutters as well as the spacers are annular with a given radius. There are different types of spacers. Some spacers have a radius less than the radius of the cutters. Other spacers have a periphery covered by rubber and these spacers have the same diameter as the cutters. There exist spacers with many different thicknesses. A sequence of cutters and spacers with specified thicknesses, which provides a requested width on the stripes, is determined in advance for each order to be manufactured. Thereafter, a set of cutters and spacers are assembled based on the predetermined sequence, so that a tool set with correct dimension is achieved. Assembling a set of cutters and spacers are both heavy and time consuming. The cutters and the spacers may weigh between 0.1 and 30 kg each.

It is known, for examples from WO2004/096489, to use a robot to automatically assemble sets of components, in the form of a cutters and spacers, based on a predetermined sequence of components having given properties. All components are stored in a storage, where components with different properties, such as different types of components, different thickness and radius, are suspended on different holders. Each holder is designed to support a number of components with the same properties. The robot knows where to retrieve a component with certain properties in the storage. The robot is programmed to receive information regarding various sequences to be assembled into tool sets. The sequences contain information on which properties the different components to be included in the set should have. The robot has previously received information on where in the storage components with different properties are located. The robot is also used to return the components to the storage after the tool set has been used.

### Object and summary of the invention

The object of the present invention is to provide an improved device for automatic handling of annular components.

This object is achieved by a device as defined in claim 1.

The device is characterized in that the component storage is arranged in the form of a carousel storage comprising a rotatable body and the holders protrude from the body in different radial directions, and the control system is arranged to control the movements of the body so that the movements of the carousel storage is synchronized with the manipulator movements, and at least some of the holders comprises a damping element with a resilient surface arranged to be in contact with the annular components when these are suspended on the holders.

Due to the invention, the former storage can be replaced by a carousel storage comprising holders that protrude into different directions. Thus, the space needed for handling the components is reduced. This is advantageous because floor space is often expensive. A further advantage of the invention is that the industrial robot previously used, can be replaced with a single manipulator with two linear axes and one rotational axis. This reduces the cost of the device.

A further advantage with the present invention is that the damping element prevents the annular components carried by the holders from swinging when the body rotates. Tests have shown that it can be a problem that the annular cutting tools will begin to swing when the carousel storage rotates. In some cases, resonance arises which enhances the swinging of the cutting tools. This makes it difficult to pick the components, and in a worst case, the components may fall off the holders. According to the invention, this problem is solved with a damping element with a resilient surface. The resilient surface allows the components to sink down a bit in the resilient material, and thus the components are held in place. The damping element thus prevents the annular components from swinging when the holder rotates.

According to an embodiment of the invention, the damping element comprises a protruding part, and at least an upper side of the protruding part is provided with a resilient material. The protruding part is projecting from the body. When the annular components are hanging on the protruding part they are resting on the resilient material. The resilient material is deformable and allows the components to sink down in material and by that the component is prevented from swinging during and after the rotary motion of the carousel storage. The resilient material is deformed due to the weight of the component.

The protruding part is, for example a first rod provided with a resilient material.

According to an embodiment of the invention, the damping element comprises a mat with resilient bristles. Experiments have shown that a mat with resilient bristles efficiently dampens the swinging, and thus prevents the components from swinging. The components sink down a bit in the bristle, and are effectively held in place in the mat. Further, the bristle provides high friction, which also contributes to holding the components in place.

According to an embodiment of the invention, the holders comprise a load carrying structure for carrying the load of the annular components and the load carrying structure is arranged spaced apart from the damping element. The load carrying structure carries the weight of the components while the damping element prevents the components from swinging. It is important that the component does not move when the manipulator picks the component from the holder, since this would complicate both gripping of the component and reading of an engraved identification code on the component.

The load carrying structure is elongated and arranged in parallel with the damping element. The damping element is arranged above the load carrying structure in an axial direction with regard to the gravity direction.

According to an embodiment of the invention, the load carrying structure comprises a second rod and a third rod arranged parallel to the first rod, wherein the first, second, and third rods are arranged so they represent corners of a triangle. This embodiment provides a stable holder. The holder is intended to prevent the components from unintentional motions during and after the component storage has rotated, and also to orient the components if they are provided with keyway cuttings or notches.

According to an embodiment of the invention, the holder also comprises a space element arranged to support the outer ends of said first, second and third rods. The space element further improves the stability of the holder.

According to an embodiment of the invention, the manipulator is arranged to pick selected components from the component storage according to a predetermined sequence of components with specified properties and to deliver the components to at least one work station for further handling of the components, and the control system is arranged to control the movements of the carousel storage in response to said sequence of components so that the carousel storage rotates the holder with the next component according to said sequence of components to a predetermined picking position, and the manipulator retrieves the component at the predetermined picking position.

According to an embodiment of the invention, the body is rotatable about a first axis, the holders are located on several levels along the body along the first axis, and the manipulator is arranged linearly movable along a second axis that is parallel to the first axis and along a third axis disposed perpendicular to the first and second axis.

According to an embodiment of the invention, the manipulator is arranged rotatable about a fourth axis in parallel with the first and second axes, and the control system is arranged to control the first, second, third, and fourth axes in response to said sequence of components.

According to an embodiment of the invention, the body is cylindrical and the holders are protruding from an envelope surface of the body and the holders are distributed over the envelope surface in a defined pattern.

### Brief description of the drawings

The invention will now be explained closer by description of different embodiments of the invention, and with reference to the accompanying drawings.
Figure 1 shows a perspective view of a device for automatic handling of annular components according to an embodiment of the invention.
Figure 2 shows the device in figure 1 in a view seen from above.
Figure 3 shows the device in figure 1 in a side view.
Figure 4 shows a side view of a holder for carrying components according to an embodiment of the invention.
Figure 5 shows the holder in figure 4 in a cross-section taken along a line A - A.

### Detailed description of preferred embodiments of the invention

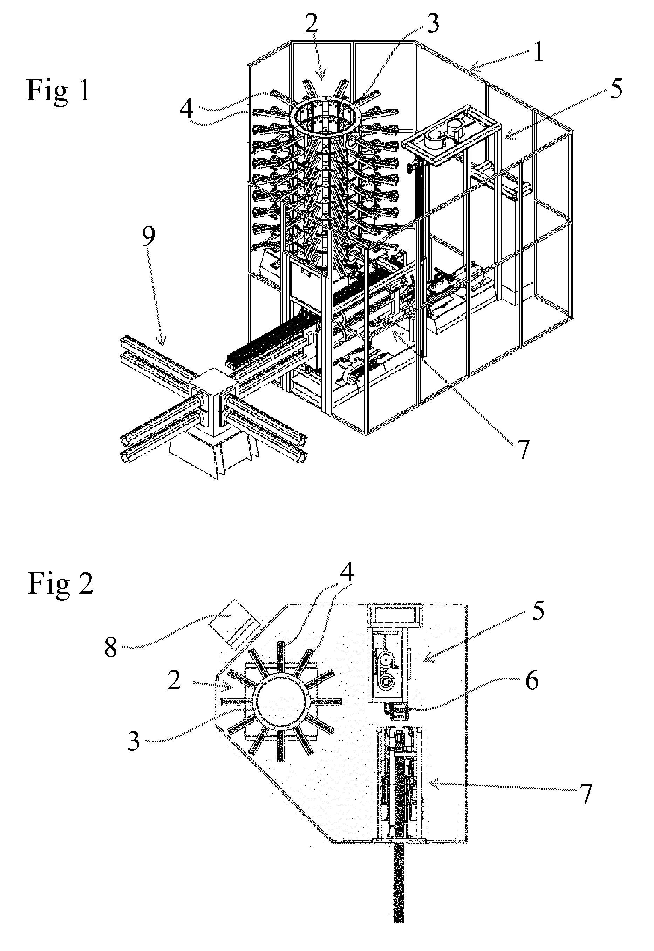

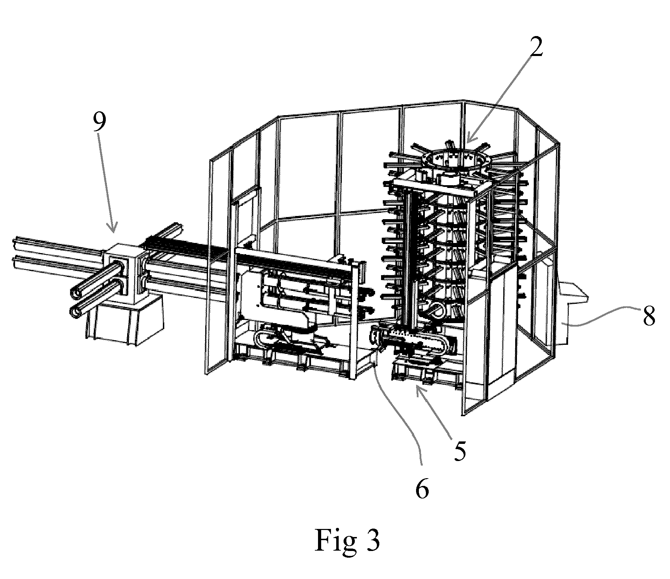

Figure 1 shows a perspective view of a device 1 for the automatic handling of components according to an embodiment of the invention. Figure 2 shows the device in figure 1 seen from above. Figure 3 shows the device in figure 1 seen from a side view. The device comprises component storage in the form of carousel storage 2 comprising a rotatable body 3 and a plurality of protruding holders 4 for carrying annular components with different properties. The holders 4 project from body 3 in different directions. The device further comprises a manipulator 5 arranged to retrieve selected components from the carousel storage in dependence on a predetermined sequence of components with specified properties, and to deliver the components to a work station 7 for further handling of the components, and a control system 8 configured to control the movements of the manipulator in response to said sequence of components. The control system is also arranged to control the rotation of the body 3 in response to the predetermined sequence of components so that the movements of the carousel storage are synchronized with the movements of the manipulator. By that, the carousel storage rotates the holder with the next component according to the sequence of components to a predetermined picking position, and the manipulator retrieves the component at the predetermined picking position.

The components to be handled are cutting tool comprising cutters and spacers. A tool set comprises a plurality of cutters and a number of spacers arranged between the cutters. The cutters and spacers form together a tool set adapted to cut a wider strip in a number of thinner strips. The components are annular and are suspended on specially designed holders 4 in the carousel storage. Each holder 4 is intended for carrying a certain type of component with specified properties, for example, cutters with a certain thickness and diameter, or a distance of a certain thickness. The device 1 automatically retrieves the components according to a predetermined sequence of components having certain properties, for example, a certain thickness. When the device 1 has retrieved a component, the device leaves the component to an intermediate storage 7 or to a turnstile 9, which comprises a number of elongated elements intended for receiving the components.

The carousel storage 2 is rotatably arranged about an axis, which in this example is a vertical axis. Due to the carousel storage, the manipulator only needs three motion axes. In this embodiment, the manipulator is arranged to move along two linear axes and are rotatable about a rotational axis. In this example, the manipulator is linearly movable along a vertical axis and a horizontal axis. The rotational axis of the manipulator is vertical, and coincides with one of the linear axes, in this example with the vertical axis. The device comprises a number of motors that actuates the movements of the axes. In this embodiment, the device comprises a motor that rotates the carousel storage, and the manipulator comprises three motors which actuate the three axes of the manipulator. In an alternative embodiment, the carousel storage may also comprise a plurality of sections which can rotate independent of each other, to reduce the cycle time. Two or more sections in the carousel storage will then have separate rotary drive, which means that the carousel storage is actuated by as many motors as the number of independent rotational sections.

The control system 8 is arranged to control the axes of the manipulator as well as the axes of the carousel storage in dependence on the predetermined sequences of components. The components are retrieved one at a time by the manipulator and are assembled into a set. The control system 8 is arranged to control the movements of the manipulator and the carousel storage based on one or more software programs. The control system 8 comprises a processor and required memory units. The device 1 further comprises a gripping tool 6 located at the manipulator 5. The gripping tool 6 is arranged to connect the component to the gripper tool and then to hold the component while the manipulator moves the component to the turnstile or to any other place. The gripping tool can advantageously be controlled from the control system 8.

In this embodiment, the carousel storage comprises a cylindrical body 3 and the holders 4 are placed at several levels along the body. A length axis of the cylindrical body coincides with the rotational axis of the carousel storage. The holders 4 protrude from an envelope surface of the cylindrical body 3 and are distributed over the envelope surface in a defined pattern. In this example, the holders are placed in horizontal and vertical rows.

To prevent the components from swinging during and after rotational movements of the carousel storage, each of the holders 4 comprises an elongate damping element with a resilient surface arranged to be in contact with the annular components when these are suspended on the holders. Preferably, the resilient surface extends along most of the length of the damping element. The resilient surface can be provided in many different ways. What is important is that the material of the resilient surface is deformable to allow the annular components to sink down in the resilient material. The damping element comprises a protruding part projecting from the envelope surface of the body 3, and at least an upper side of the protruding part is provided with a resilient material. The protruding part is made of a solid material, for example, of metal or hard plastic. The resilient material is, for example, rubber, textile or a soft plastic. The resilient material is, for example, a tape covered with a layer of rubber. The resilient material is attached to the surface of the protruding part, for example, by means of gluing.

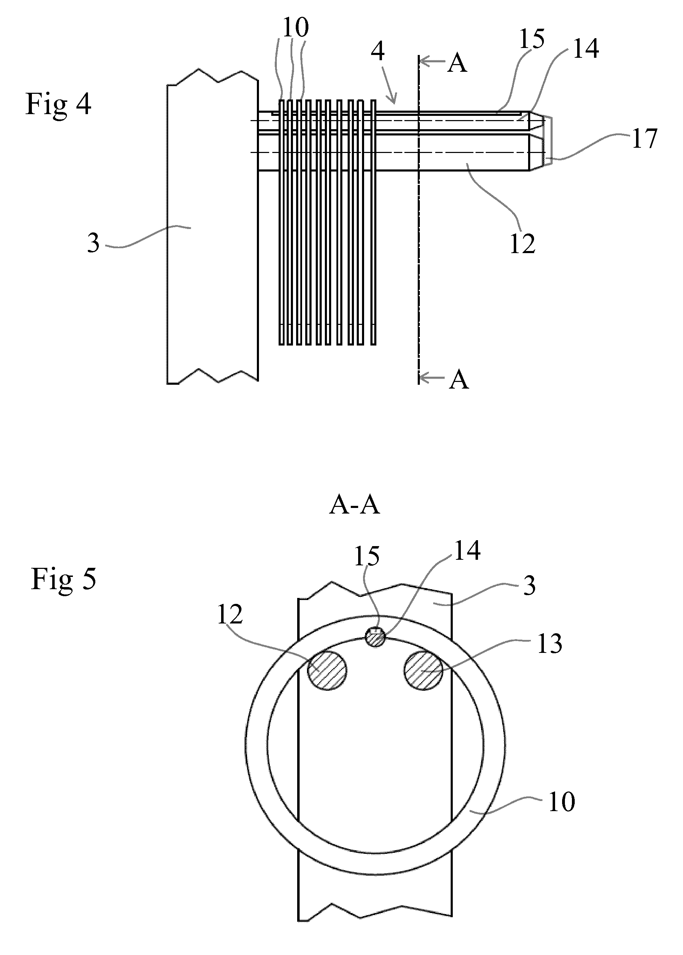

Figure 4 shows an example of a holder 4 for carrying annular components 10. Figure 5 shows the holder 4 in a cross-section A-A. The holder 4 comprises a load carrying structure in the form of two parallel load-carrying rods 12, 13 arranged at a distance from each other. The holder 4 further comprises a damping element including a protruding part in the form of a rod 14 having one side supplied with an elongated insertion 15 of a resilient material that is softer than the material of rod. The rod 14 is arranged in parallel with the load carrying rods 12, 13, and spaced apart from these. The rods 12, 13, 14 are arranged so that they form corners of a triangle. The holder 4 also comprises a space element 17 arranged to hold together the outer ends of the rods 12-14.

It is also possible to cover a part or the whole rod 14 with the resilient material. In a preferred embodiment of the invention, the resilient material is a mat including resilient bristles. It is also possible to use other types of resilient material that dampens the swinging of the annular tools and keeps the components in place, such as rubber, textile or plastic. The rods 12, 13, 14 can, for example, be made of plastic or metal. Such a holder is simple, robust and keeps the components in place so that they will not swing when the carousel storage rotates. However, it is not possible to have too high rotation speed, since the annular tools will then be removed from holders due to centrifugal forces. The control system is arranged to ensure that the rotational speed of the carousel storage will not exceed a certain critical speed.

The present invention is not limited to the embodiments described but can be varied and modified within the scope of the following claims. For example, the control system may comprise two separate units which interact with one another. A carousel storage can be used by two independent manipulators e.g. two manipulators for each cutting line with a common storage. Further, the holder can be designed in different ways. For example, the holder may include a protruding load carrying structure covered with a resilient material, such as a load carrying rod covered with a resilient material. The load carrying structure can also be designed in different ways.

## Claims

1. A device for automatic handling of annular components (10) comprising cutting tools, wherein the device comprises:
- a component storage (2) including a plurality of protruding holders (4) for carrying annular components,
- a manipulator (5) arranged to pick selected components from the component storage, and
- a control system (8) configured to control the movements of the manipulator,
**characterized in that** the component storage is arranged in the form of a carousel storage comprising a rotatable body (3) and said holders protrude from the body in different radial directions, and the control system is arranged to control the movements of the body so that the movements of the body is synchronized with the movements of the manipulator, and at least some of the holders comprise a damping element (14,15) with a resilient surface arranged to be in contact with the annular components (10) when these are suspended on the holders.

2. The device according to claim 1, wherein said damping element comprises a protruding part (14), and at least an upper side of the protruding part is provided with a resilient material (15).

3. The device according to claim 1 or 2, wherein said damping element comprises a mat of resilient bristles (15).

4. The device according to claim 2 or 3, wherein said protruding part (14) is a first rod.

5. The device according to any of the previous claims, wherein the holders (4) comprise a load carrying structure (12,13) for carrying the load of the annular components and the load carrying structure is arranged spaced apart from the damping element.

6. The device according to claim 5, wherein the load carrying structure (12,13) is elongated and arranged in parallel with the damping element (14, 15).

7. The device according to 4 and 5, wherein said load carrying structure comprises a second rod (12) and a third rod (13) arranged in parallel with said first rod (14), and the first, second, and third rods are arranged so they represent corners of a triangle.

8. The device according to claim 7, wherein the holder (4) also comprises a space element (17) arranged to support the outer ends of said first, second and third rods (12-14).

9. The device according to any of the previous claims, wherein the a manipulator (5) is arranged to pick selected components from the component storage according to a predetermined sequence of components with specified properties and to deliver the components to at least one work station for further handling of the components, and the control system is arranged to control the movements of the carousel storage in response to said sequence of components so that the carousel storage rotates the holder with the next component according to said sequence of components to a predetermined picking position, and the manipulator retrieves the component at the predetermined picking position.

10. The device according to any of the previous claims, wherein said body (3) is rotatable about a first axis, the holders (4) are located on several levels along the body along the first axis, and the manipulator is arranged linearly movable along a second axis that is parallel to the first axis and along a third axis disposed perpendicular to the first and second axis.

11. The device according to claim 10, wherein the manipulator (5) is rotatable about a fourth axis parallel with the first and second shaft, and the control system (8) is configured to control the first, second, third, and fourth axes in response said sequence of components.

12. The device according to any of the preceding claims, wherein said body (3) is cylindrical and the holders (4) projects from the envelope surface of the cylindrical body, and the holders are distributed over the envelope surface in a defined pattern.
